(19) Europäisches Patentamt
European Patent Office
Office européen des brevets

(11) **EP 4 029 732 A1**

(12) **EUROPEAN PATENT APPLICATION**

(43) Date of publication:
**20.07.2022 Bulletin 2022/29**

(21) Application number: **21152048.1**

(22) Date of filing: **18.01.2021**

(51) International Patent Classification (IPC):
**B60P 1/28** *(2006.01)*    **B60R 13/01** *(2006.01)*

(52) Cooperative Patent Classification (CPC):
**B60P 1/286; B60R 13/01**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Metso Outotec Finland Oy**
**33101 Tampere (FI)**

(72) Inventors:
• **van Zyl, Ian**
**Baldivis, 6171 (AU)**
• **Nicholls, Carl**
**Forrestdale, 6112 (AU)**

(74) Representative: **Hoffmann Eitle**
**Patent- und Rechtsanwälte PartmbB**
**Arabellastraße 30**
**81925 München (DE)**

(54) **WEAR LINER ELEMENT FOR A TRUCK HAUL BODY**

(57)    A wear liner element (3, 3') for a truck haul body (1) is provided with an expandable ejector unit (50) to be arranged between the outer surface of the wear liner element (3, 3') and the opposite surface of the truck haul body. The ejector unit (50) has a first part for abutting or engaging with the outer surface of the wear liner element (3, 3') and a second part for abutting or engaging with the truck haul body surface and is operable to increase a spacing between its first and second parts to thereby increase the spacing between the outer surface of the wear liner element (3, 3') and the truck haul body surface.

Fig. 1

EP 4 029 732 A1

**Description**

Field of the invention

The invention relates to a wear-resistant liner element which is intended for a surface on a truck haul body subjected to wear, such as a truck bed or platform. The invention also relates to a truck haul body and a method for disengaging a wear-resistant liner element from a truck haul body.

Prior Art

Trucks, engineered e.g. for use in high-production mining and heavy-duty construction environments, are equipped with truck haul bodies capable of accommodating a large amount of material, such as rock, crushed ore or the like. Hauling masses of often sharp and heavy load makes the truck haul body experiencing a heavy wear due to impact and abrasion.

To protect the surface of the truck haul body, it is common to equip the interior of the truck haul body with a lining.

To give an example, EP 0 098 127 A1 discloses a vehicular body for hauling materials, comprising an external skeletal surface of metal members, a metal lining supported by the skeletal surface, and means for detachably fastening the lining to the skeletal surface so that the metal lining can be removed from the surface for maintenance or replacement purposes. The metal lining is made up from steel plates which can be attached directly to the surface by welding, wherein the weldments can be severed by a cutting torch to permit the lining to be removed for maintenance or repair purposes. Alternatively, the steel plates can be secured to the skeletal surface by coupling means which permit relative movement between the plates and the surface so that they can expand and contract differentially without stressing each other. Screws or removable fasteners could be used to avoid the need for the use of a cutting torch.

On the other hand, while the truck haul body usually is made from steel, the lining material is often made from another material. One commonly used type of lining is an elastic lining comprising for example a natural or synthetic rubber material or polyurethane. An advantage of the elastic lining material is that its material properties may be used to mitigate the effects of heavy impact of material on the truck haul body as material is hauled from quite some altitude onto the truck haul body from for example an excavator. The elastic lining material effectively absorbs the energy from the impact distributing said energy over a larger area. Moreover, the noise is reduced and the comfort for the operator improved. Lining for haul trucks are usually made from a plurality of wear liner elements extending over surfaces of the truck haul body to form the lining.

The use of separate wear liner elements simplifies manufacture by limiting its dimensions and mass. Moreover, it facilitates service of the truck haul body, as individual damaged or worn-out wear liner elements may be exchanged directly on site without having to remove large parts of the surrounding lining.

Rubber or other elastic wear liner elements may be provided with a backing plate of metal.

Also, wear-resistant liner elements have been developed in which different materials are combined in the outwardly directed surface of the element, over which surface material in the form of pieces or particles, such as crushed ore and crushed rock material, is intended to move.

In WO 2011/091287 A1, a wear liner for use on machinery such as truck beds, hoppers, and heavy material haulers is disclosed. The wear liner is an inflatable liner which has an exterior deformable wear layer and a supportive backing assembly comprising a rigid backing plate made of steel. The backing plate is mounted to an interior wall of the machinery by mounts such as threaded struts. The deformable wear layer and backing plate together define an inflatable cavity of the liner. The deformable wear layer is capable of outward deformation when the cavity is charged with positive pressure fluid, e.g. pressurized air. An air-control device is used to rapidly inflate and deflate the inflatable internal cavity to create a vibratory outward deflection of the exterior expandable layer. Such vibratory movement assists in removing unwanted material/debris from the exterior lining of exterior expandable layer.

EP 2 607 160 A1 relates to a wear-resistant liner element which is intended for a surface on a truck haul body subjected to wear. The wear-resistant liner element comprises elastomeric material and is characterized by at least one open cavity in its surface facing the truck haul body. When material is unloaded from the truck haul body, the open cavity in the surface of the wear-resistant liner element expands and the wear-resistant liner element flexes away from the truck haul body surface such that any material adherent on the wear-resistant liner element is released.

Irrespective of the specific configuration of the wear liner elements, the plates wear over time and have to be changed at more or less regular intervals. In a large truck haul body, there can be a relatively large number of wear liner elements to replace. Conventionally, the wear liner elements are fixated by welding or bolting, bolt screws, self fixation (through tension force) or other means of fixation, and under certain circumstances it can be time consuming and difficult to remove the wear liner elements from the truck haul body.

Summary of the invention

In view of the above, an object underlying the invention is to facilitate the removal of worn liner elements from a truck haul body.

To achieve this object, the present invention provides a wear liner element for a truck haul body as recited in claim 1.

According to the invention, the wear liner element is provided with an expandable ejector unit to be arranged between the outer surface of the wear liner element and the facing surface of the truck haul body. The ejector unit has a first part for abutting or engaging with the outer surface of the wear liner element and a second part for abutting or engaging with the truck haul body surface, and is operable to increase a spacing between the first and second parts to thereby increase the spacing between the outer surface of the wear liner element and the truck haul body surface.

The ejector unit is mounted in its undeployed state between the outer surface of the wear liner element and the opposite surface of the truck haul body. In other words, the ejector unit is pre-installed between the wear liner element and the truck haul body surface. If time has come for the wear liner element to be removed, the ejector unit is operated to be expanded, prising the wear liner element away from its support.

The provision of the ejector unit makes it possible to consider alternative ways to attach the wear liner elements o to the truck haul body: instead of the fixation means used conventionally (welding, bolting or the like as set forth above), epoxy, glue, cement, lead, zinc, babbit metal, and/or the like could now be used to attach the wear liner elements to the truck haul body, to provided that the so fixated wear liner elements can be removed by means of the ejector unit.

Optional further features of the wear liner element for a truck haul body are recited in the dependent claims.

The ejector unit may be expandable pneumatically or hydraulically. Also conceivable in principle are mechanically operable ejector units though, such as a high-powered spring released by remote control, or a servo-actuated lever arm.

The ejector unit may be operable to increase a volume of the ejector unit.

Specifically, the expandable ejector unit may include a lifting bag.

A lifting bag is capable of lifting loads of several tons, wherein a lifting bag with a capacity of e.g. six tons could be used for the purposes of the invention. The lifting bag is usually inflated with compressed air and in some cases with water or grout.

In comparison with other types of jacking equipment, lifting bags have major advantages such as the very small insertion height and fast operation. They are also light-weight and practically maintenance-free.

The lifting bag to be used according to the invention may be made from one or several layers per side. Suitable materials for the layer(s) include woven steel and Kevlar with neoprene. The surfaces of the lifting bags may be structured to provide an anti-slip effect.

The lifting bag functions according to the following principle:

```
principle: Force (F) = Pressure (P) x Area (A). It is
```

It is therefore advantageous to provide the lifting bag with a sufficiently large surface area to apply the desired force to the wear liner element to be removed.

Suitable high-pressure inflatable lifting bags are available on the market, e.g. from MatJack Inc., for lifting, moving, spreading and fixing applications.

The wear liner element may further comprise means for operating the ejector unit, e.g. including a hydraulic or pneumatic line or hose extending to each ejector unit in the truck haul body.

The ejector unit may be disposed in the area of an edge of the wear liner element. Compared to the case in which the ejector unit would be arranged in a central area of the wear liner element, the removal of the wear liner element is facilitated thereby: When activated, the ejector unit acts upon an edge portion of the wear liner element to "peel" the wear liner element away from the underlying truck haul body surface.

The wear liner element may comprise an elastomeric material, e.g. rubber or polyurethane.

The wear liner element may further comprise a structural element such as a steel backing plate for reinforcement. If the wear liner element comprises an elastomeric material, the structural element may be a steel backing plate completely or partly embedded in the elastomeric material of the wear liner element.

A cavity or recess may be included in the outer surface of the wear liner element to accommodate the expandable ejector unit. The recess acts as an ejector unit engagement portion. In other embodiments, the ejector unit could be installed between the outer surface of the wear liner element and the opposite truck haul body surface without such a recess being formed in the back of the wear liner element.

The invention also provides a truck haul body as recited in claim 13 which comprises at least one wear liner element of the type described above.

In the truck haul body, a plurality of wear liner elements may be arranged to extend over main surfaces of said truck haul body, forming a bottom lining and/or a front lining and/or two opposite side linings.

The truck haul body may further comprise means for operating the ejector unit, e.g. including a hydraulic or pneumatic line or hose extending to each ejector unit in the truck haul body surface.

Several wear liner elements may be arranged in at least one row or array along the truck haul body surface.

At least one row or array of the wear liner elements may be arranged so that several or even all wear liner elements in the row are provided with an ejector unit. Depending on the number of wear liner elements which need to be replaced, only individual wear liner elements could be removed and replaced by activating the corresponding ejector unit(s), or a large part or even all of the wear liner elements of a truck haul body could be removed and replaced. Not all of the wear liner elements would have to be equipped with corresponding ejector units though, but it would as well be possible to remove only one or a few wear liner elements by activating corresponding ejector units whereas other wear liner elements are removed in a different way.

One lifting bag could in principle be installed to act upon several (adjacent) wear liner elements. A load distributor element could then be provided so that the lifting bag is unaffected by any potential gap between the wear liner elements or if one wear liner element comes off before the other.

In the truck haul body, a backing such as an epoxy backing may be disposed between the outer surface of the wear liner element and the truck haul body surface to fixate the wear liner element to the truck haul body surface and/or integrate the ejector unit with the wear liner element and the truck haul body surface. While epoxy is one suitable example, glue, cement and/or other suitable materials known in the art could equally be used for the backing.

The truck haul body may further be associated with a control unit to control the activation of the ejector unit(s), e.g. from a remote location, e.g. by way of a wireless connection.

The present invention further provides a method of dismounting at least one wear liner element from a truck haul body as recited in claim 19. The method includes the steps of arranging an expandable ejector unit between the outer surface of the wear liner element and the opposite surface of the truck haul body, the ejector unit having a first part abutting or engaging with the outer surface of the wear liner element and a second part abutting or engaging with the truck haul body surface, and operating the ejector unit to increase a spacing between the first and second part to thereby increase the spacing between the outer surface of the wear liner element and the truck haul body surface.

If the wear liner elements are arranged in at least one row or array along the truck haul body surface, one key wear liner element in each of the rows or arrays may be removed first, e.g. by activating a corresponding ejector unit, to release any stresses. Once a first wear liner element has been removed (possibly with the help of the ejector unit), the removal of the remaining wear liner elements in said row or array, either by activating corresponding ejector unit(s) or by other means, may be facilitated.

The ejector units for the individual wear liner elements in a row or array could be activated one after the other so as to dismount the elements one after the other along the truck haul body surface; or several ejector units could be activated simultaneously to dismount several, possibly several adjacent, wear liner elements simultaneously.

If several rows of wear liner elements are provided, as it is usually the case in truck haul bodies, the removal of the rows of elements would start with an outermost row of elements in the truck haul body. It could, however, as well be that only one or a few element needs replacing, and if so, only these individual element(s) may be removed by activating the corresponding ejector unit(s) and replaced.

Upon completion of the dismounting of one row of elements, the dismounted wear liner elements can then be removed from the truck haul body in any known manner.

The invention covers the use of an expandable ejector unit such as a lifting bag to dismount a wear liner element from a truck haul body, as recited in claim 21.

Finally, the present invention also relates to a wear liner element for a truck haul body as recited in claim 22. The wear liner element of claim 22 comprises an ejector unit engagement portion configured to receive or accommodate an expandable ejector unit.

The wear liner element of claim 22, and the expandable ejector unit which it is configured to receive or accommodate, may comprise any of the aforementioned features or combinations thereof.

Also, the ejector unit engagement portion could for example be a recess or cavity in the outer surface of the wear liner element to accommodate the expandable ejector unit. The recess or cavity could have a temporary, easy to remove, material inserted therein during installation. When it is time to install the ejector unit, this insert could be removed or destroyed in place to make room for the ejector unit.

The shape of the recess in the wear liner element can be designed to match the shape of the ejector unit, e.g. the lifting bag. The matching shapes may provide for a form-fit between the ejector unit and the wear liner element.

Brief description of the drawings

The above, as well as additional objects, features and advantages of the present invention will be better understood through the following illustrative and non-limiting detailed description of preferred embodiments of the present invention, with reference to the appended drawings, where the same reference numerals will be used for similar elements, wherein:

Figure 1 illustrates a truck having truck haul body equipped with wear liner elements in accordance with the present invention;

Figure 2 is a perspective view of a wear liner element according to an embodiment of the invention,

Figure 3a illustrates one of the wear liner elements of Figure 1;

Figure 3b shows a lifting bag in a deflated state;

Figures 4a and 4b illustrate the wear liner element with the lifting bag in a perspective view and from the side;

Figures 5a and 5b illustrate the wear liner element, again in a perspective view and from the side, with the lifting bag after inflation; and

Figure 5c shows the lifting bag in the inflated state.

Detailed description of a preferred embodiment

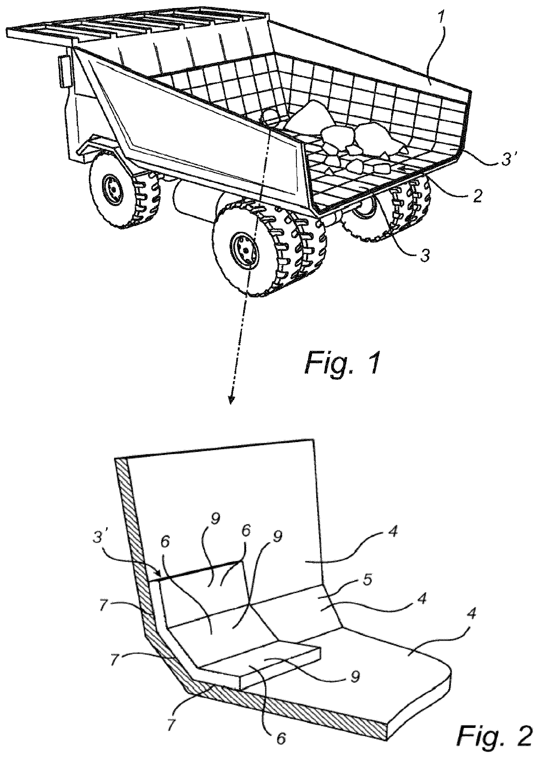

Fig. 1 illustrates a truck having a truck haul body 1 of metal material comprising a wear-resistant lining 2. The truck is typically an off-highway dump truck engineered for use in high-production mining and heavy-duty construction environments. In use, the truck 1 will receive, in the truck haul body 1, a load of material, such as crushed stone, ore or the like, from another machine such as an excavator or a wheel loader. The truck may then be used to move the load of material to other areas within a working area, for example to a processing facility such as a crusher. The truck is arranged to swivel the truck haul body 1 around a pivot axis at the end of the truck, such that the load may be tipped off the truck haul body 1.

To protect the truck haul body 1 from damage due to the heavy material being hauled into, and tipped out from the truck haul body 1, surfaces of the truck haul body 1 are covered with a wear-resistant lining 2. As can be seen in Fig. 1, the lining 2 is arranged to extend over inner surfaces of the truck haul body 1.

The wear-resistant lining 2 is constituted by a plurality of wear-resistant liner elements 3, 3'. The wear-resistant liner elements 3, 3' are provided along a surface of the truck haul body 1. Specifically, in this embodiment, the lining 2 comprises a plurality of main liner elements arranged to extend over main surfaces of the truck haul body, and a plurality of transition liner elements 3' arranged to extend over edge portions 5 (see also Figure 2) and/or corner portions of the truck haul body 1. Each transition liner element 3' forms a lining transition between at least two nonparallel main liner elements 3 of the plurality of main liner elements.

In the embodiment illustrated, the main liner elements 3 form two opposite side linings, a front lining and a bottom lining.

The lining is thus divided into separate parts covering separate regions. The transition liner elements 3' are arranged to connect regions or arrays of main liner elements 3. The transition liner elements 3' are disposed at the edges 5 and corners of the truck haul body 1. Thus, the transition liner elements 3' act as a frame forming transitions between adjacent sections of main liner elements 3.

While a transition liner elements at corners of the truck haul body 1 are not specifically illustrated here, such a corner element would form a lining transition between three nonparallel main lining elements which are located at a corner of said lining and which form part of e.g. the bottom lining, the front lining and one of the two opposite side linings, respectively.

The wear liner elements 3, 3' comprise through holes (not shown) arranged for allowing fastening of the wear liner elements 3, 3' to a surface of the haul truck body 1. The fastening is achieved by using through bolts or an alternative fastening device penetrating through the through holes of the wear liner elements 3, 3' extending further into matching through holes of the haul truck body 1.

In Fig. 2, a transition liner element 3' according to one exemplary embodiment of the invention is illustrated. The transition liner element 3' is intended for an edge portion 5 at a transition between the bottom and front surfaces of the truck haul body 1 which are subjected to wear. The transition liner element 3' comprises three portions 9 being angled in relation to each other in order to better fit against the edges of the truck haul body 1.

In contrast, wear liner elements 3 covering the bottom or base surface of the truck haul body 1 are flat and comprise no angled portions (see Figure 1), i.e. have essentially the shape of a plate.

Both types of wear liner elements 3, 3' have an inwardly directed surface 6, over which material in the form of pieces or particles, such as crushed ore and crushed rock material, moves, and an outwardly directed surface 7 facing the truck haul body surface.

The wear-resistant liner elements 3, 3' comprise an elastomeric material, e.g. rubber or polyurethane. A water repellent rubber material could be used.

Individual or all of the wear liner elements 3, 3' may further comprise a structural element for reinforcement. The structural element may be a steel backing plate completely or partly embedded in the elastomeric material of the wear liner element. In the embodiment, steel backing plates (not shown) are embedded inside the wear liner elements 3, 3' by vulcanizing them into the rubber.

To facilitate the removal of the wear liner elements 3 from the truck haul body 1 and exchange against new wear liner elements, the wear liner elements 3 are each provided with an expandable ejector unit 50 arranged between the outer surface of the wear liner element 3 and the opposite surface of the truck haul body 1. The ejector unit is expandable so as to increase the spacing between the outer surface of the wear liner element 3 and the surface of the truck haul body 1. The ejector unit is mounted in its undeployed state between the wear liner element and the truck haul body surface. In other words, the ejector unit is pre-installed between the outer surface of the wear liner element 3 and the opposite surface of the truck haul body 1.

In the operational state of the truck haul body 1, an epoxy backing (not specifically illustrated) could be poured into the remaining gap between the outer surfaces of the wear liner elements 3 and the facing surface of the truck haul body 1. The epoxy backing would be provided to structurally reinforce the wear liner elements 3 and provide for a fixation of the wear liner elements 3 to the surface of the truck haul body 1. The backing material would fill the void between the wear liner elements 3 and the truck haul body surface to provide a solid assembly. In a truck haul body according to the invention, the epoxy backing would also integrate the expandable ejector unit 50 with the wear liner element 3 and the truck haul body surface. Lead, zinc, babbit metal, glue, cement and other materials may be used as alternatives to epoxy resin. The provision of a backing is not mandatory, though, and the invention is equally applicable to wear liner elements attached to the truck haul body by welding, bolting or in other conventionally known ways.

If time has come for the wear liner element 3 to be removed, the ejector unit 50 is operated to be expanded, prising the wear liner element 3 away from its support, thereby breaking any epoxy or other backing possibly provided for fixation.

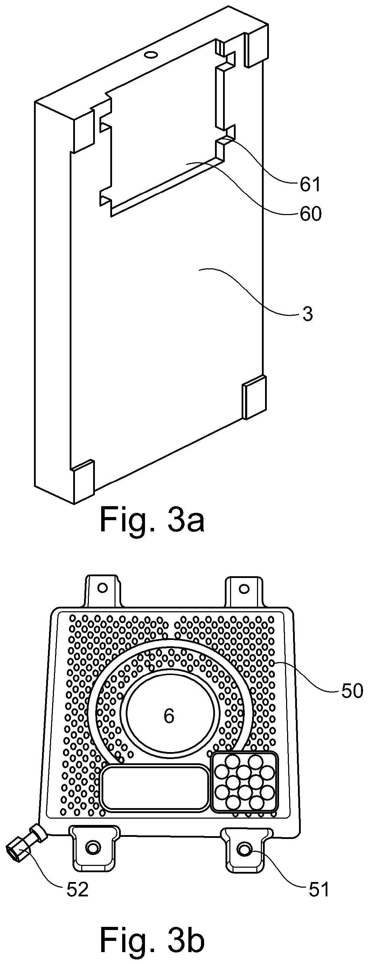

The invention encompasses ejector units which are expandable in different ways, e.g. pneumatically or hydraulically. One practical implementation of the expandable ejector unit, which is also used in the embodiment shown in Figures 3a through 5c which will now be described in more detail, is an inflatable lifting bag 50. The lifting bag 50 is arranged between the outer surface of the wear liner element 3 and the opposite surface of the truck haul body 1. The lifting bag 50 has opposite main surfaces, a first one abutting or engaging with the outer surface of the wear liner element 3 and a second one abutting or engaging with the surface of the truck haul body 1. The lifting bag 50 is installed in its deflated state. When the lifting bag 50 is operated to be inflated, the volume of the lifting bag 50 increases, and the spacing between the first and second surfaces is enlarged to thereby push the wear liner element 3 away from the surface of the truck haul body 1, dismounting the wear liner element 3 from the truck haul body surface.

Each of the wear liner elements 3 illustrated in Figure 1 may be provided with a lifting bag 50.

In the present embodiment, each lifting bag 50 is associated with one wear liner element 3. In principle it is conceivable to associate a lifting bag 50 with several, i.e. two, three or even more, adjacent wear liner elements 3 which would then be acted upon simultaneously. On the other hand, it is also conceivable to associate one wear liner element with several lifting bags, specifically in the case of the transition liner elements 3' which could be equipped with individual lifting bags for two or each of the three portions 9 thereof; in the case of corner liner elements; or else in the case of large wear liner elements which could be equipped with lifting bags e.g. in the area of several corners thereof.

In the illustrated embodiment, the lifting bag 50 is disposed in the area of an edge of the respective wear liner element 3. Compared to the case in which the lifting bag 50 would be arranged in a central area of the wear liner element 3, the removal of the wear liner element 3 is facilitated thereby: When inflated, the lifting bag 50 then acts upon the edge portion of the wear liner element 3 to "peel" the wear liner element 3 away from the underlying truck haul body surface.

Figure 3a shows a wear liner element 3 of the embodiment of Figure 1, for the time being without a lifting bag 50. The wear liner element 3 of this embodiment is distinguished from similar wear liner elements of the prior art in that a cavity or recess 60 is included in the back of the wear liner element 3 which is large enough to accommodate the deflated lifting bag 3 when the wear liner element 3 is mounted to the truck haul body 1.

Illustrated in Figure 3b is one exemplary implementation of a lifting bag which is available under the trade name "MatJack" for lifting, moving, spreading and fixing applications. The lifting bag is capable of lifting a predetermined weight such as e.g. 6 tons if inflated with air under a corresponding pressure. In the present embodiment, the lifting bag has an approximately square shape, but a lifting bag for use in the invention could as well have other shapes such as rectangular or round.

The lifting bag 50 and the recess 60 in the wear liner element 3 have matching shapes, e.g. to provide for a form-fit between the lifting bag 50 and the wear liner element 3. In the present embodiment, the lifting bag 50 has four tabs 51 integrally molded to the edges thereof for lifting or attaching to fixtures. In the present embodiment, the recess 60 in the back of the wear liner element 3 includes corresponding cut-outs 61.

In other embodiments, the lifting bag 50 could be installed between the outer surface of the wear liner element 3 and the opposite surface of the truck haul body 1 without such a recess 60 being formed in the back of the wear liner element 3.

The lifting bag 50 functions according to the following principle: Force (F) = Pressure (P) x Area (A). The surface area of the lifting bag 50 should therefore be sufficiently large to create the desired force. The surface area of the lifting bag 50 should suitably amount to a sufficient percentage of the surface area of the wear liner element 3, i.e. the surface area of the outer surface of the wear liner element as shown in Figure 3a. In the illustrated embodiment, the surface area of the lifting bag 50 could amount to about one quarter of the surface area of the outer surface of the wear liner element 3, to give an example.

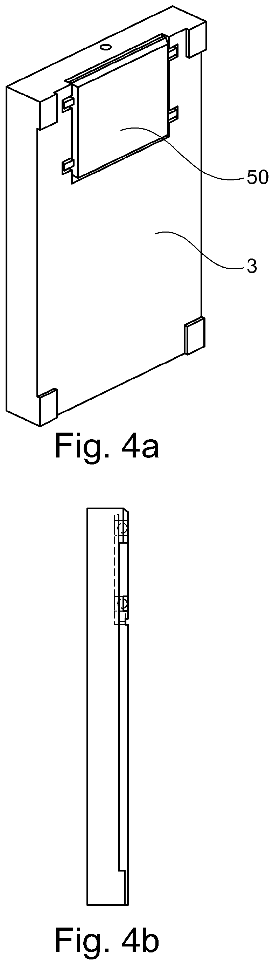

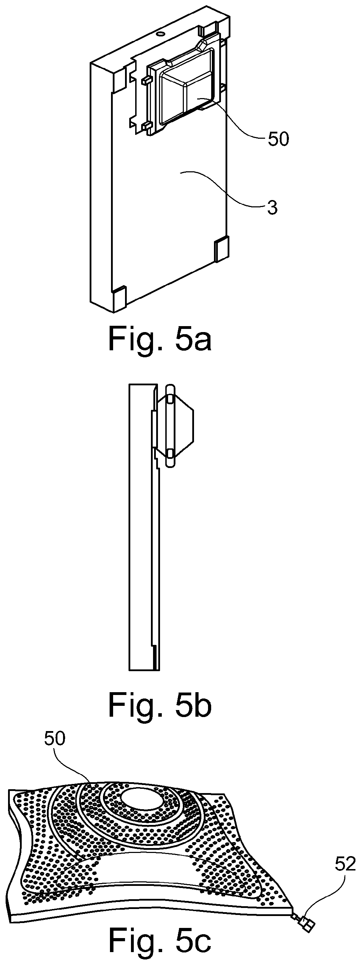

Figures 4a and 4b illustrate the wear liner element 3, in a perspective view and from the side, with the lifting bag 50 installed in the aforementioned recess 60. Figures 5a and 5b illustrate the wear liner element 3, again in a perspective view and from the side, with the lifting bag 50 after inflation. Also shown is the exemplary lifting bag 50 in the inflated state (Figure 5c).

For operating the ejector units, i.e. lifting bags 50, a pneumatic line or hose (not shown) extends from each lifting bag in the truck haul body 1 towards a source of compressed air (not shown). The lifting bags 50 in Figures 3b and 5c include a corresponding connector 52 for a pneumatic line. The pneumatic lines from several lifting bags 50 could be combined via corresponding manifolds. A control unit (not shown) such as push button, deadman or joy stick controller is provided to control the supply of compressed air to independently or simultaneously inflate one or more of the lifting bags 50.

Considering the truck haul body as a whole, one, several or all wear liner elements in each row are provided with an ejector unit. One element in each row is the "key" element which is removed first and preferably by way of an associated ejector unit or lifting bag 50, before the remaining wear liner elements 3 are dismounted, either by activating associated ejector units such as lifting bags 50 or by different means. In one implementation, only one wear liner element in each row is provided with an ejector unit, or even only one wear liner element of the truck haul body is provided with an ejector unit. Once this wear liner element is removed, the remaining wear liner elements fall out or at least are removed more easily.

The lifting bags 50 for the individual elements 3 in a row or array can in principle be activated one after the other so as to dismount the elements 3 one after the other along the truck haul body surface 1. One could also consider activating several lifting bags 50 simultaneously to dismount several, possibly several adjacent, wear liner elements 3 simultaneously. Anyhow, the process is continued until all elements 3 in a circumferential row are dismounted and ready to be removed from the truck haul body surface.

The dismounted wear liner elements 3 are then removed from the truck haul body in any known manner.

The invention will result in an overall improvement in shutdown efficiency and effectiveness when exchanging worn wear wear liner elements.

While one embodiment of the invention has been described with reference to Figures 1 to 5c, the scope of the invention is not restricted to this embodiment but defined by the appended claims. Various modifications are included within the scope.

## Claims

1.   A wear liner element (3, 3') for a truck haul body (1),
      the truck haul body (1) comprising a surface subjected to wear, the surface being configured to be equipped with at least one wear liner element (3, 3'), with an outer surface of the wear liner element (3, 3') facing the truck haul body surface,
      **characterized in that**
      the wear liner element (3, 3') is provided with an expandable ejector unit (50) to be arranged between the outer surface of the wear liner element (3, 3') and the opposite truck haul body surface, and
      the ejector unit (50) has a first part for abutting or engaging with the outer surface of the wear liner element (3, 3') and a second part for abutting or engaging with the truck haul body surface and is operable to increase a spacing between its first and second parts to thereby increase the spacing between the outer surface of the wear liner element (3, 3') and the truck haul body surface.

2.   The wear liner element (3, 3') for a truck haul body (1) of claim 1, wherein the ejector unit (50) is operable pneumatically or hydraulically.

3. The wear liner element (3, 3') for a truck haul body (1) of claim 1 or 2, wherein the ejector unit (50) is operable to increase its volume.

4. The wear liner element (3, 3') for a truck haul body (1) of claim 3, wherein the ejector unit (50) includes a lifting bag.

5. The wear liner element (3, 3') for a truck haul body (1) of any one of the preceding claims, further comprising means for operating the ejector unit (50).

6. The wear liner element (3, 3') for a truck haul body (1) of claim 5, wherein the operating means include a hydraulic or pneumatic line extending to each ejector unit (50) in the truck haul body (1).

7. The wear liner element (3, 3') for a truck haul body (1) of any one of the preceding claims, wherein the ejector unit (50) is disposed in the area of an edge of the wear liner element (3, 3').

8. The wear liner element (3, 3') for a truck haul body (1) of any one of the preceding claims, wherein the wear liner element (3, 3') comprises an elastomeric material, e.g. rubber or polyurethane.

9. The wear liner element (3, 3') for a truck haul body (1) of any one of the preceding claims, wherein the wear liner element (3, 3') further comprise a structural element for reinforcement

10. The wear liner element (3, 3') for a truck haul body (1) of claims 8 and 9, wherein the structural element is a steel backing plate completely or partly embedded in the elastomeric material of the wear liner element (3, 3').

11. The wear liner element (3, 3') for a truck haul body (1) of any one of the preceding claims, wherein the outer surface of the wear liner element (3, 3') is configured to receive or to accommodate the expandable ejector unit (50).

12. The wear liner element (3, 3') for a truck haul body (1) of claim 11, wherein a cavity or recess (60) is included in the outer surface of the wear liner element (3, 3') to accommodate the expandable ejector unit (50).

13. A truck haul body (1) comprising a surface subjected to wear on which at least one wear liner element (3, 3') is attached, with an outer surface of the wear liner element (3, 3') facing the truck haul body surface,
**characterized in that**
the wear liner element (3, 3') is in accordance with any one of claims 1 to 12.

14. The truck haul body (1) of claim 13, wherein a plurality of wear liner elements (3, 3') are arranged to extend over main surfaces of said truck haul body (1), forming a bottom lining and/or a front lining and/or two opposite side linings.

15. The truck haul body (1) of claim 13 or 14, further comprising means for operating the ejector unit (50), such as a hydraulic or pneumatic line or hose extending to each ejector unit (50) in the truck haul body (1).

16. The truck haul body (1) of any one of claims 13 to 15, wherein several wear liner elements (3, 3') are arranged in at least one row or array along the truck haul body surface, and at least one row or array of the wear liner elements (3, 3') is arranged so that one, several or all wear liner elements in the row are provided with an ejector unit (50).

17. The truck haul body (1) of any one of claims 13 to 16, wherein a backing such as an epoxy backing is disposed between the outer surface of the wear liner element (3, 3') and the facing truck haul body surface to fixate the wear liner element (3, 3') to the truck haul body surface and/or integrate the ejector unit (50) with the wear liner element (3, 3') and the truck haul body surface.

18. The truck haul body (1) of any one of claims 13 to 17, wherein the truck haul body (1) is associated with a control unit to control the activation of the ejector unit(s), e.g. from a remote location, e.g. by way of a wireless connection.

19. A method of dismounting at least one wear liner element (3, 3') from a truck haul body (1),
the truck haul body (1) comprising a surface subjected to wear to which at least one wear liner element (3, 3') can be fixed, with an outer surface of the wear liner element (3, 3') facing the truck haul body surface,
**characterized in the steps of**
arranging an expandable ejector unit (50) between the outer surface of the wear liner element (3, 3') and the opposite truck haul body surface, the ejector unit (50) having a first part for abutting or engaging with the outer surface of the wear liner element (3, 3') and a second part for abutting or engaging with the truck haul body surface, and operating the ejector unit (50) to increase a spacing between the first and second part to thereby increase the spacing between the outer surface of the wear liner element (3, 3') and the truck haul body surface.

20. The method of claim 19, wherein several wear liner elements (3, 3') are arranged in at least one row or array along the truck haul body surface, and in each of the rows or arrays, one key liner element is removed prior to activating the ejector unit(s) (50) in said row or array.

21. Use of an expandable ejector unit (50) such as a lifting bag to dismount a wear liner element (3, 3') from a truck haul body (1),
the truck haul body (1) comprising a surface subjected to wear which is clad with at least one wear liner element (3, 3'), with an outer surface of the wear liner element (3, 3') facing the truck haul body surface,
the ejector unit (50) being arranged between the outer surface of the wear liner element (3, 3') and the opposite truck haul body surface, and
the ejector unit (50) having a first part for abutting or engaging with the outer surface of the wear liner element (3, 3') and a second part for abutting or engaging with the truck haul body surface, the ejector unit (50) being operable to increase a spacing between the first and second parts to thereby increase the spacing between the outer surface of the wear liner element (3, 3') and the truck haul body surface.

22. A wear liner element (3, 3') for a truck haul body (1),
the truck haul body (1) comprising a surface subjected to wear, such as a truck bed or platform, the surface being configured to be equipped with at least one wear liner element (3, 3'), with an outer surface of the wear liner element (3, 3') facing the truck haul body surface,
**characterized in that**
the wear liner element (3, 3') comprises an ejector unit engagement portion configured to receive or accommodate an expandable ejector unit (50) to be arranged between the outer surface of the wear liner element (3, 3') and the opposite truck haul body surface, the ejector unit (50) having a first part for abutting or engaging with the outer surface of the wear liner element (3, 3') and a second part for abutting or engaging with the truck haul body surface and being operable to increase a spacing between the first and second parts to thereby increase the spacing between the outer surface of the wear liner element (3, 3') and the truck haul body surface.

23. The wear liner element (3, 3') of claim 22, wherein the ejector unit engagement portion is a recess (60) in the outer surface of the wear liner element (3, 3') to accommodate the expandable ejector unit (50).

*Fig. 1*

*Fig. 2*

Fig. 3a

Fig. 3b

Fig. 4a

Fig. 4b

Fig. 5a

Fig. 5b

Fig. 5c

EP 4 029 732 A1

Europäisches
Patentamt
European
Patent Office
Office européen
des brevets

## EUROPEAN SEARCH REPORT

Application Number

EP 21 15 2048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 771 492 A1 (METSO MINERALS OY [FI]) 3 February 2021 (2021-02-03)<br><br>* paragraph [0062] - paragraph [0077]; figures 2a-4c * | 1-7,11, 12,19, 22,23 | INV.<br>B60P1/28<br>B60R13/01 |
| A | EP 3 418 117 A1 (METSO SWEDEN AB [SE]) 26 December 2018 (2018-12-26)<br>* paragraph [0049] - paragraph [0055]; figures 1-4b * | 1-22 | |
| A,D | EP 2 607 160 A1 (METSO MINERALS SWEDEN AB [SE]) 26 June 2013 (2013-06-26)<br>* paragraph [0026] - paragraph [0035]; figures 1-7 * | 1-22 | |
| A | WO 2020/078918 A1 (TRELLEBORG IZARRA SA [ES]) 23 April 2020 (2020-04-23)<br>* figures 1-6 * | 1-22 | |
| A,D | EP 0 098 127 A1 (PHILIPPI HAGENBUCH INC [US]) 11 January 1984 (1984-01-11)<br>* figures 1,4 * | 1-22 | TECHNICAL FIELDS SEARCHED (IPC)<br><br>B60P<br>B60R |
| A,D | US 2011/180367 A1 (DUNN DONALD C [US] ET AL) 28 July 2011 (2011-07-28)<br>* figures 1-5 * | 1-22 | |

The present search report has been drawn up for all claims

| Place of search | Date of completion of the search | Examiner |
|---|---|---|
| The Hague | 21 June 2021 | van der Bijl, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 21 15 2048

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2021

| Patent document cited in search report | | Publication date | Patent family member(s) | | Publication date |
|---|---|---|---|---|---|
| EP 3771492 | A1 | 03-02-2021 | CN | 112295652 A | 02-02-2021 |
| | | | EP | 3771492 A1 | 03-02-2021 |
| | | | WO | 2021018959 A1 | 04-02-2021 |
| EP 3418117 | A1 | 26-12-2018 | AU | 2018287147 A1 | 16-01-2020 |
| | | | AU | 2018287150 A1 | 16-01-2020 |
| | | | BR | 112019026767 A2 | 30-06-2020 |
| | | | BR | 112019026769 A2 | 30-06-2020 |
| | | | CA | 3067112 A1 | 27-12-2018 |
| | | | CA | 3067117 A1 | 27-12-2018 |
| | | | CL | 2019003691 A1 | 10-07-2020 |
| | | | CL | 2019003692 A1 | 10-07-2020 |
| | | | CN | 110770077 A | 07-02-2020 |
| | | | CN | 110785316 A | 11-02-2020 |
| | | | EP | 3418117 A1 | 26-12-2018 |
| | | | EP | 3642075 A1 | 29-04-2020 |
| | | | EP | 3642076 A1 | 29-04-2020 |
| | | | PE | 20200243 A1 | 03-02-2020 |
| | | | PE | 20200244 A1 | 03-02-2020 |
| | | | US | 2020180522 A1 | 11-06-2020 |
| | | | US | 2020189488 A1 | 18-06-2020 |
| | | | WO | 2018234494 A1 | 27-12-2018 |
| | | | WO | 2018234497 A1 | 27-12-2018 |
| EP 2607160 | A1 | 26-06-2013 | AR | 089433 A1 | 20-08-2014 |
| | | | AU | 2012357948 A1 | 17-07-2014 |
| | | | BR | 112014015269 A2 | 13-06-2017 |
| | | | CA | 2859465 A1 | 27-06-2013 |
| | | | CN | 104136272 A | 05-11-2014 |
| | | | EP | 2607160 A1 | 26-06-2013 |
| | | | ES | 2748510 T3 | 17-03-2020 |
| | | | PE | 20142119 A1 | 04-01-2015 |
| | | | RU | 2014125845 A | 20-02-2016 |
| | | | US | 2014327265 A1 | 06-11-2014 |
| | | | WO | 2013092489 A1 | 27-06-2013 |
| WO 2020078918 | A1 | 23-04-2020 | AU | 2019363222 A1 | 06-05-2021 |
| | | | WO | 2020078918 A1 | 23-04-2020 |
| EP 0098127 | A1 | 11-01-1984 | AU | 1573683 A | 05-01-1984 |
| | | | CA | 1199048 A | 07-01-1986 |
| | | | EP | 0098127 A1 | 11-01-1984 |
| | | | IN | 158666 B | 03-01-1987 |
| | | | JP | S5911981 A | 21-01-1984 |
| | | | US | 4474404 A | 02-10-1984 |

EPO FORM P0459

For more details about this annex : see Official Journal of the European Patent Office, No. 12/82

page 1 of 2

**EP 4 029 732 A1**

**ANNEX TO THE EUROPEAN SEARCH REPORT
ON EUROPEAN PATENT APPLICATION NO.**

EP 21 15 2048

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2021

| Patent document cited in search report | Publication date | Patent family member(s) | Publication date |
|---|---|---|---|
| US 2011180367 A1 | 28-07-2011 | AU 2011207363 A1 | 09-08-2012 |
| | | BR 112012017830 A2 | 26-12-2017 |
| | | CA 2824832 A1 | 28-07-2011 |
| | | CL 2012002017 A1 | 06-12-2013 |
| | | CO 6571893 A2 | 30-11-2012 |
| | | US 2011180367 A1 | 28-07-2011 |
| | | WO 2011091287 A2 | 28-07-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0098127 A1
- WO 2011091287 A1
- EP 2607160 A1